# EUROPÄISCHE PATENTANMELDUNG

(11) **EP 0 544 116 A2**
(43) Veröffentlichungstag der Anmeldung: **02.06.1993**
(21) Anmeldenummer: 92118423.0
(22) Anmeldetag: 28.10.1992
(51) Int. Cl.: B23Q 16/02, F16H 1/14, F16D 71/00

(54) **Positioniervorrichtung**

(30) Priorität: 28.10.1991 DE 4135532
(71) Anmelder: Fibro GmbH, D-74189 Weinsberg (DE)
(72) Erfinder: Massmann, Hans Joachim, Dipl.-Ing., W-6953 Gundelsheim (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(57) **Zusammenfassung**

Die Erfindung betrifft eine Positioniervorrichtung mit zumindest einem zu positionierenden Organ, die ein erstes Verzahnungsmittel (11) und ein zweites Verzahnungsmittel (12) umfaßt, die miteinander kämmen. Die beiden Verzahnungsmittel (11, 12) sind dabei unter Ausbildung einer Bremswirkung bzw. Klemmblockierung relativ zueinander verschiebbar.

## Beschreibung

Die Erfindung betrifft eine Positioniervorrichtung nach dem Oberbegriff des Patentanspruchs 1.

Eine derartige Positioniervorrichtung wird dazu verwendet, zu positionierende Organe oder Einrichtungen, wie z.B. Greifer, insbesondere Greifer von Handhabungsautomaten, Werkstücke, Vorrichtungen und dgl. in eine vorbestimmte Position zu bringen und in dieser Position zu fixieren. Dabei ist es erforderlich, daß eine in eine bestimmte Position zu bringende Einrichtung möglichst schnell und genau in ihre Sollstellung gebracht wird.

Der Erfindung liegt die Aufgabe zugrunde, eine Positioniervorrichtung der eingangs genannten Art zu schaffen, mit der die Stellbewegung eines zu positionierenden Bauteils so gebremst und fixiert werden kann, daß das Bauteil mit hoher Genauigkeit in seine Sollposition bewegbar ist und dort sicher festgehalten werden kann.

Diese Aufgabe wird durch eine Positioniervorrichtung gelöst, wie sie im Anspruch 1 angegeben ist.

Erfindungsgemäß sind also die beiden Verzahnungsmittel zur Bildung eines Brems- oder Blockiersystems unter Ausbildung einer Bremswirkung bzw. einer Klemmblockierung relativ zueinander verschiebbar. Durch diese Verschiebung der Verzahnungsmittel gegeneinander wird dabei erreicht, daß eine weitere Stellbewegung des mit dem einen Verzahnungsmittel verbundenen zu positionierenden Organs verhindert wird. Dabei ist es von Vorteil, daß eine auf diese Weise eingestellte Position des zu positionierenden Organs gleichzeitig fixiert wird.

Da für die Verschiebung der Verzahnungsmittel gegeneinander in ihre Brems- bzw. Klemmblockier-Stellung nur eine kurze Verschiebebewegung erforderlich ist, ergeben sich sehr kurze Reaktionszeiten der Positioniervorrichtung und eine hohe Positioniergenauigkeit.

Eine besonders einfache Ausgestaltung der Erfindung zeichnet sich dadurch aus, daß die beiden Verzahnungsmittel zur antriebsseitigen Drehmomentverstärkung ausgebildet sind, wobei das erste, antriebsseitige Verzahnungsmittel gegenüber dem zweiten Verzahnungsmittel verschiebbar angeordnet ist.

Durch die für eine Drehmomentverstärkung erforderliche unterschiedliche Ausbildung der Verzahnungsmittel läßt sich die erfindungsgemäße gewünschte Bremswirkung bzw. Klemmblockierung besonders wirkungsvoll erreichen, da die Verzahnungsmittel einer Übertragung einer Drehwegung entgegen dem normalen Momentenfluß auch in ihrer Freigabe-Stellung bereits einen erheblichen Widerstand entgegensetzen.

Bei einer besonders bevorzugten praktischen Ausgestaltung der Erfindung ist vorgesehen, daß die Verzahnungsmittel als Kegelräder mit Hypoid-Verzahnung ausgebildet sind.

Hierdurch läßt sich die Bremswirkung bzw. Klemmblockierung der Verzahnungsmittel auf besonders wirkungsvolle Weise erreichen, wobei in der Freigabe-Stellung die Verzahnungsmittel einwandfrei miteinander kämmen können.

Praktische Ausgestaltungen der Erfindung sind in den Ansprüchen 5, 6 und 7 beschrieben.

Durch die Druckmittel betätigte Verschiebung des Betätigungsgliedes in seine Freigabe-Stellung läßt sich die Fixierung der Positionierung besonders einfach lösen. Die Federbeaufschlagung des Betätigungsgliedes in seine Brems- bzw. Klemmblockier-Stellung hat dabei den Vorteil, daß eine fixierte Sollposition eines zu positionierenden Organs sich nicht infolge von irgendwelchen Leckagen im Druckmittelsystem zur Unzeit löst.

Um die Verschiebung der Verzahnungsmittel auf einfache Weise in Abhängigkeit von einer einzustellenden Sollposition steuern zu können, ist bei einer Weiterbildung der Erfindung vorgesehen, daß der Lageregelkreis einen dem zu positionierenden Organ zugeordneten Positionsgeber aufweist, der mit der Steuereinheit verbunden ist.

Um die Genauigkeit der Positionierung zu erhöhen, sind nach den Ansprüchen 9, 10 und 11 Anschlagmittel vorgesehen, die die Sollposition eines zu positionierenden Organs festlegen. Aufgrund der Anschlagmittel kann der Positionsgeber zur Wegerfassung und eine im Lageregelkreis vorgesehene Logikschaltung einfacher gestaltet werden, ohne daß die Genauigkeit der Positionierung darunter leidet.

Insbesondere läßt sich hierbei die Positionierung in der Weise durchführen, daß zunächst das zu positionierende Organ in eine Stellung bewegt wird, in der es fast die gewünschte Sollposition erreicht hat. In dieser Stellung wird es zunächst durch eine Verschiebung der Verzahnungsmittel gegeneinander gebremst. Anschließend, nach Lösen der Klemmblockierung kann dann die Stellbewegung bis in die durch die Festanschläge vorgegebene Sollposition mit niedriger Geschwindigkeit weitergeführt werden, bis die Anschläge aneinander anliegen. In dieser Stellung werden dann die Verzahnungsmittel wiederum gegeneinander verschoben, so daß die Sollposition fixiert ist.

Bei einer besonders bevorzugten Ausführung der Erfindung ist vorgesehen, daß das Betätigungsglied drehfest und axial verschiebbar mit einer Abtriebswelle eines Antriebsmotors verbunden ist, der von der Steuereinheit des Lageregelkreises beaufschlagbar ist.

Besonders vorteilhaft ist es hierbei, daß die Positionierung des zu positionierenden Organs und die Positionierfixierung direkt im Getriebestrang zwischen dem Antriebsmotor und dem zu positionierenden Organ erfolgt, so daß auf eine separate Bremse verzichtet werden kann. Hierbei lassen sich sehr kurze Reaktionszeiten und eine hohe Positioniergenauigkeit mit besonders geringem Aufwand einfach und sicher erreichen.

Entsprechend den Ansprüchen 13 und 14 ist der Antriebsmotor über eine Kupplung mit dem antriebsseitigen Verzahnungsmittel verbunden, so daß die Antriebsverbindung zwischen Motor und zu positionierenden Organ unterbrochen ist, wenn die Verzahnungsmittel in ihrer Brems- bzw. Klemmblockier-Stellung sind.
Um eine bei der Positionierung auftretende Streubreite oder Toleranz zu beseitigen, ist bei einer anderen Weiterbildung der Erfindung vorgesehen, daß mit dem ersten, angetriebenen Verzahnungsmittel eine Positionsteilscheibe drehfest verbunden ist, die eine Vielzahl von umfangsmäßig verteilten Indexmitteln aufweist, wobei jeweils eines der Indexmittel von einem Stellglied beaufschlagbar ist, um die Positionsteilscheibe in die genaue Position zu drehen.

Durch die erfindungsgemäß vorgesehene, eintriebsseitig angeordnete Positionsteilscheibe kann eine Vielzahl von einzustellenden Positionen sehr genau erreicht werden. Dabei ist es vorteilhaft, daß die Positionierung nur in ein durch Toleranzen festgelegtes Positionsstreufenster erfolgen muß. Die Bewegung eines zu positionierenden Organs in seine Soll-Position erfolgt dann über die Positionsteilscheibe, wobei nur relativ kleine Positionierkräfte und Momente erforderlich sind, da die Positionsteilscheibe drehfest mit dem antriebsseitigen Verzahnungsmittel verbunden ist.

Sind die Verzahnungsmittel dabei zur Drehmomentenverstärkung als Untersetzungsgetriebe ausgebildet, so wird dadurch auch die Anzahl der genau erreichbaren Positionen, die durch die Anzahl der an der Positionsteilscheibe vorgesehenen Indexmittel festgelegt ist, entsprechend dem Übersetzungsverhältnis vervielfacht.

Da die Positionsteilscheibe eingangsseitig vor der Übersetzung wirksam ist, wird auch die Genauigkeit der Positionierung so verbessert, daß praktisch eine 100 %ige Genauigkeit erreicht wird. Diese Genauigkeit läßt sich dabei insbesondere auch mit rein pneumatischer Betätigung erzielen.

Zweckmäßige Ausgestaltungen dieser Weiterbildung der Erfindung sind in den Ansprüchen 16 bis 19 beschrieben.

Die Erfindung wird im folgenden beispielsweise anhand der Zeichnung näher erläutert; in dieser zeigt:
- Fig. 1: eine Positioniervorrichtung mit einem antriebsseitigen hydraulischen oder pneumatischen Motor,
- Fig. 2: eine abgewandelte Ventilanordnung für eine Positioniervorrichtung nach Fig. 1,
- Fig. 3: eine Teildarstellung einer Positioniervorrichtung ähnlich Fig. 1, bei der zusätzliche Festanschläge vorgesehen sind,
- Fig. 4: eine Teildarstellung einer Positioniervorrichtung ähnlich Fig. 1 mit pneumatisch oder hydraulisch verstellbaren Festanschlägen,
- Fig. 5: eine Teildarstellung einer Positioniervorrichtung entsprechend Fig. 1, bei der der Antriebsmotor über eine Kupplung angeschlossen ist,
- Fig. 6: eine Darstellung einer anderen Ausgestaltung der Kupplung,
- Fig. 7: eine teilweise, schematische Darstellung einer Positioniervorrichtung mit einem antriebsseitigen elektrischen Motor,
- Fig. 8: eine Teildarstellung einer Positioniervorrichtung entsprechend Fig. 1, die eine translatorische Bewegung steuert,
- Fig. 9: eine Positioniervorrichtung für ein eine Translationsbewegung ausführendes Bauteil, das direkt von einem Linearantrieb beaufschlagt ist,
- Fig. 10: eine Teildarstellung einer Positioniervorrichtung entsprechend Fig. 1, bei der zwischen dem Antriebsmotor und dem Betätigungsglied eine Positionsteilscheibe vorgesehen ist, und
- Fig. 11: einen schematischen Schnitt im wesentlichen nach Linie XI-XI in Fig. 10.

In den verschiedenen Figuren der Zeichnung sind einander entsprechende Bauteile mit gleichen Bezugszeichen bezeichnet.

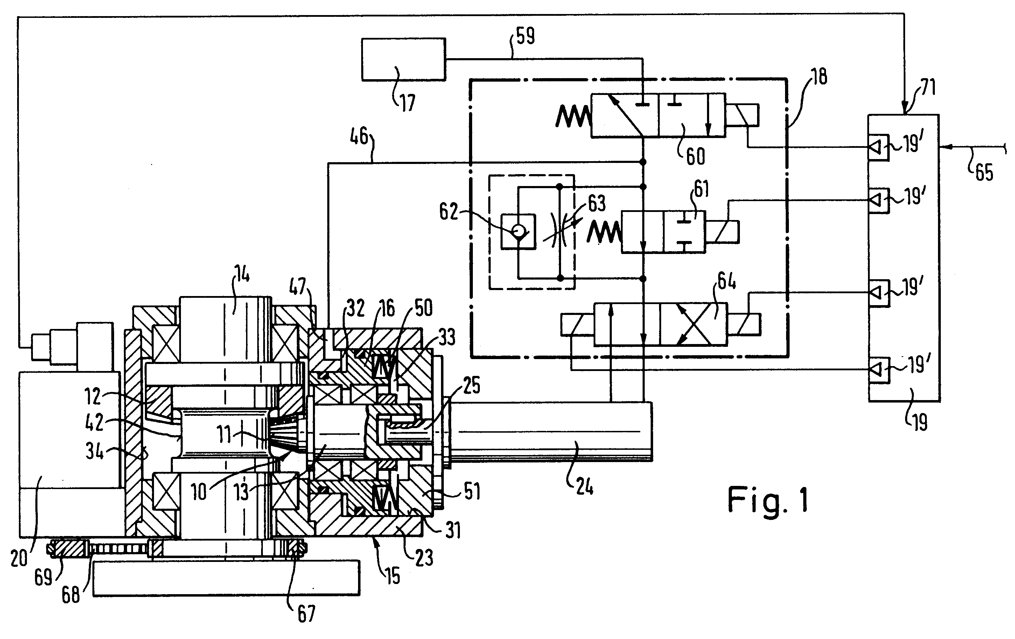

Fig. 1 zeigt eine Positioniervorrichtung mit einem Gehäuse 23, in dem ein Getriebe 10 zur antriebsseitigen Drehmomentverstärkung angeordnet ist. Das Gehäuse 23 weist einen Aufnahmeraum 34 auf, in dem ein drehbares Abtriebsglied 14 des Getriebes 10 gelagert ist.

Ein erstes Verzahnungsmittel 11 des Getriebes 10 kämmt mit einem am Abtriebsglied 14 befestigten zweiten Verzahnungsmittel 12. Dieses zweite Verzahnungsmittel 12 ist als Kegelzahnradring ausgebildet.

Im Bereich der Zähne des ersten Verzahnungsmittels 11 weist das Abtriebsglied 14 eine umfangsmäßig umlaufende Nut 42 auf, die so ausgebildet ist, daß die radial innen liegenden Kanten der Zähne des zweiten Verzahnungsmittels 12 mit Abstand zum Abtriebsglied 14 angeordnet sind, so daß eine axiale Verschiebung des ersten Verzahnungsmittels 11 relativ zum zweiten Verzahnungsmittel 12 nicht behindert wird.

Das erste Verzahnungsmittel 11 des Getriebes 10, das als Kegelzahnrad ausgebildet ist, ist fest mit einem als Antriebsglied des Getriebes 10 dienenden Betätigungsglied 13 verbunden. Das Betätigungsglied 13 ist in einem Kolben 16 einer Kolben-Zylinder-Anordnung 15 drehbar aber axial fest gelagert und damit gemeinsam mit dem Kolben 16 axial verschiebbar.

Der Kolben 16 ist dicht in eine entsprechend ausgebildete Zylinderbohrung 31 eingesetzt, so daß eine Druckkammer 32 gebildet ist, die über eine Druckmittelleitung 46 und einen Ansteuerkanal 47 mit einem Druckmittel beaufschlagbar ist.

Auf der von der Druckkammer 32 abgewandten Stirnseite des Kolbens 16 ist eine Federkammer 33 vorgesehen, in der eine Druckfederanordnung, die vorzugsweise aus Tellerfedern 50 besteht, angeordnet ist. Die Federkammer 33 wird dabei von einer in die Zylinderbohrung 31 fest eingesetzten Befestigungsbuchse 51 begrenzt, an der sich die Tellerfedern 50 abstützen, um den Kolben 16 und damit das Betätigungsglied 13 so vorzuspannen, daß das Betätigungsglied 13 mit seinem Verzahnungsmittel 11 in Richtung auf das Verzahnungsmittel 12 am Abtriebsglied 14 vorgespannt ist.

An die Befestigungsbuchse 51 ist ein Antriebsmotor 24 angeflanscht, der sich mit seiner Abtriebswelle 25 durch die Befestigungsbuchse 51 hindurch erstreckt.

Die Abtriebswelle 25 des Motors 24 ist drehfest und axial verschiebbar mit dem Betätigungsglied 13 verbunden.

Um den als Pneumatik- oder Hydraulikmotor ausgebildeten Antriebsmotor 24 mit Druckmittel zu beaufschlagen, ist eine Druckmittelquelle 17 vorgesehen, die über eine Ventilanordnung 18 mit dem Antriebsmotor 24 verbunden ist.

Von der Druckmittelquelle 17 führt eine Druckmittelleitung 59 zu einem ersten Magnetventil 60 der Ventilanordnung 18, welches in seine Sperrstellung vorgespannt ist und von seinem Elektromagneten in seine Durchlaßstellung gebracht werden kann. In seiner Sperrstellung unterbricht das Magnetventil 60 die Druckmittelzufuhr zum Antriebsmotor 24 und verbindet diesen gleichzeitig mit einer nicht dargestellten Rücklaufleitung für Druckmittel. In Strömungsrichtung des Druckmittels hinter dem Magnetventil 60 zweigt von der Druckmittelleitung 59 die Druckmittelleitung 46 ab, die über den Ansteuerkanal 47 zur Druckkammer 32 führt.

Hinter dem Abzweig der Druckmittelleitung 46 ist in der Druckmittelleitung 59 ein zweites Magnetventil 61 angeordnet, das in seine Durchlaßstellung vorgespannt ist und von seinem Elektromagneten in seine Sperrstellung gebracht werden kann. Parallel zum zweiten Magnetventil 61 ist ein Rückschlagventil 62 und ein variables Drosselventil 63 angeschlossen.

Um die Drehrichtung des Antriebsmotors 24 steuern zu können, ist ferner ein als 4/2-Wegeventil ausgebildetes drittes Magnetventil 64 vorgesehen, das durch zwei Elektromagneten umschaltbar ist.

Zur Ansteuerung der Ventilanordnung 18 ist eine elektronische Steuereinheit 19 vorgesehen, deren Steuerausgänge 19' zur Ansteuerung der einzelnen Magnetventile 60, 61, 64, mit diesen über geeignete Steuerleitungen verbunden ist.

Über einen Eingang 65 ist der Steuereinheit 19 eine Positionsvorgabe als Sollwert für die mit der Positioniervorrichtung durchzuführenden Positionierung zuführbar.

Um die Position einer jeweils zu positionierenden Einrichtung, wie z.B. Greifer, Werkstücke, Vorrichtungen usw., die am Abtriebsglied 14 in nicht dargestellter Weise angeordnet sein können, zu erfassen, ist ein Positionsgeber 20 am Gehäuse 23 der Positioniervorrichtung befestigt, der als mechanisches oder elektronisches Nockenschaltwerk oder als inkrementaler oder absoluter Drehgeber ausgebildet sein kann. Um eine vom Abtriebsglied 14 ausgeführte Bewegung auf den Positionsgeber 20 zu übertragen, ist an dem Abtriebsglied 14 beispielsweise ein Zahnrad 67 angeordnet, das einen Zahnriemen 68 treibt, der mit einem Drehbewegungseingang-Zahnrad 69 des Positionsgebers 20 zusammenwirkt. Die vom Positionsgeber 20 erzeugten Positionssignale werden über eine Positionssignalleitung an einen Positionssignaleingang 71 der Steuereinheit 19 angelegt.

Die anhand von Fig. 1 beschriebene Positioniervorrichtung arbeitet wie folgt:
Zur Positionierung einer am Abtriebsglied 14 in nicht dargestellter Weise angeordneten Einrichtung wird der Steuereinheit 19 zunächst vom Positionsgeber 20 die Ist-Position gemeldet, während gleichzeitig über den Eingang 65 die Soll-Position anliegt. Um das Abtriebsglied 14 und damit die zu positionierende Einrichtung in die Soll-Position zu bringen, wird zunächst das die Drehrichtung des Antriebsmotors 24 steuernde, dritte Magnetventil 64 in seine entsprechende Stellung gebracht. Anschließend wird das erste Magnetventil 60 in seine Durchlaßstellung geschaltet, wodurch der Antriebsmotor 24 mit der Druckmittelquelle 17 verbunden und damit eingeschaltet wird. Gleichzeitig wird über die Druckmittelleitung 46 und den Ansteuerkanal 47 die Druckkammer 32 der Kolben-Zylinder-Einheit 15 mit Druckmittel beaufschlagt, so daß das Betätigungsglied 13 durch den Kolben 16 in seine Freigabe-Stellung verschoben wird, um eine Übertragung der Antriebsbewegung vom Antriebsmotor 24 über das Getriebe 10 auf das Abtriebsglied 14 zu ermöglichen.

Sobald das Abtriebsglied 14 die Soll-Position erreicht hat, was vom Positionsgeber 20 erfaßt wird, wird das Magnetventil 60 in seine Sperrstellung umgeschaltet, in der sowohl der Antriebsmotor 24 als auch die Druckkammer 32 zur Druckentlastung mit einer nicht dargestellten Druckmittelrücklaufleitung verbunden werden. Hierdurch wird der Antriebsmotor 24 abgeschaltet. Gleichzeitig wird das Betätigungsglied 13 von den Tellerfedern 50 in eine Stellung verschoben, in der das erste Verzahnungmittel 11 so in das zweite Verzahnungsmittel 12 am Positionierglied gedrückt wird, daß das Getriebe 10, dessen Verzahnungsmittel eine Hypoid-Verzahnung bilden, gebremst bzw. klemmblockiert wird, wodurch die Bewegung des Abtriebsgliedes 14 zum Positionieren gebremst und das Abtriebsglied 14 in seiner entsprechenden Position fixiert wird.

Anstelle der beschriebenen einstufigen Positionierung kann die Positionierung auch zweistufig erfolgen, indem das Abtriebsglied 14 zunächst in der beschriebenen Weise in eine Vor-Endstellung bewegt und dort gebremst wird.

Um das Abtriebsglied 14 in seine Endstellung zu bewegen, wird zunächst das Magnetventil 61 in seine Sperrstellung umgeschaltet. Wird nun das Magnetventil 60 in seine Durchlaßstellung umgeschaltet, so ist der Antriebsmotor 24 nur über das als Bypaß geschaltete variable Drosselventil 63 mit der Druckmittelquelle 17 verbunden. Auf diese Weise wird der Antriebsmotor 24 in einem Schleichgang betrieben, so daß das Abtriebsglied 14 langsam in die Endstellung bewegt wird. Sobald die Endstellung erreicht ist, wird wiederum das Magnetventil 60 in seine Sperrstellung umgeschaltet, so daß die Druckkammer 32 druckentlastet und der Antriebsmotor 24 abgeschaltet wird. Eine schnelle Druckentlastung des Antriebsmotors 24 erfolgt dabei über das Rückschlagventil 62, das parallel zum variablen Drosselventil 63 angeschlossen ist.

Um die Positionierung einer Einrichtung möglichst schnell vornehmen zu können und trotzdem die hohe Genauigkeit beim Positionieren zu erhalten, die erreicht wird, wenn eine Soll-Position im Schleichgang angefahren wird, kann auch ohne ein Abbremsen der Stellbewegung durch die Verzahnungsmittel 11, 12 der Antriebsmotor 24 einfach auf eine langsame Antriebsbewegung umgeschaltet werden, indem das Magnetventil 61 während der Beaufschlagung des Antriebsmotors 24 mit Druckmittel umgeschaltet wird.

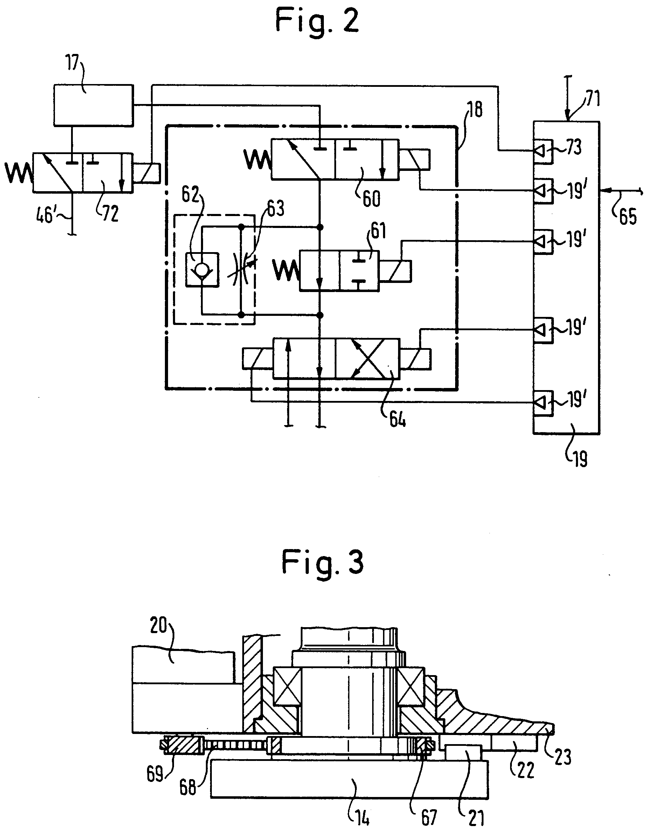

In Fig. 2 ist eine abgewandelte Magnetventilanordnung für die Positioniervorrichtung nach Fig. 1 gezeigt.

Um die Druckkammer 32 mit der Druckmittelquelle 17 zu verbinden, ist eine Druckmittelleitung 46' vorgesehen, die über ein Magnetventil 72 von der Druckmittelquelle 17 zum Ansteuerkanal 47 führt. Das Magnetventil 72 ist dabei unabhängig vom ersten Magnetventil 50 der Ventilanordnung 18 ansteuerbar. Die Steuereinheit 19 weist hierfür einen weiteren Steuerausgang 73 auf, von dem eine entsprechende Steuerleitung zum Magnetventil 72 führt.

Durch die Verwendung von zwei Magnetventilen 60, 72 zur Ansteuerung des Antriebsmotors 24 bzw. zur Beaufschlagung der Druckkammer 32 zum Verschieben des Betätigungsgliedes 13 in seine Lösestellung wird erreicht, daß das Betätigungsglied 13 unabhängig vom Antriebsmotor 24 verschiebbar ist. Hierdurch ist es z.B. möglich, zunächst den Antriebsmotor 24 abzuschalten und das Bremsglied 13 in seiner Freigabe-Stellung zu halten, so daß die Stellbewegung des Abtriebsgliedes 14 infolge seiner Trägheit weitergeführt wird, da das Getriebe 10 zunächst nicht gebremst bzw. blockiert ist. Sobald das Positionierglied 14 dann infolge der Nachlaufbewegung seine Soll-Position erreicht hat, wird auch die Druckkammer 32 durch Umschalten des Magnetventils 72 von der Druckmittelquelle 17 getrennt, so daß die Tellerfedern 50 das Betätigungsglied 13 in seine Brems- und Positionierstellung drücken können. Hierdurch läßt sich die Nachlaufbewegung des Abtriebsgliedes 14 zum Erreichen der Sollposition ausnutzen.

Die in Fig. 3 teilweise gezeigte Positioniervorrichtung entspricht im wesentlichen der Positioniervorrichtung nach Fig. 1, wobei zusätzlich zum Festlegen einer einzustellenden Position am Gehäuse 23 als Anschlagmittel einrichtbare Festanschläge 22 vorgesehen sind, die mit entsprechenden, einrichtbaren Festanschlägen 21 zusammenwirken, die als Anschlagmittel am Abtriebsglied 14 angeordnet sind.

Zum Positionieren einer zu positionierenden Einrichtung, z.B. eines Werkstücks, wird das Abtriebsglied 14 über das Betätigungsglied 13 vom Antriebsmotor 24 zunächst in Richtung auf die Soll-Position bewegt, bis das Abtriebsglied 14 eine Vor-Endstellung erreicht. Sobald diese Vor-Endstellung erreicht ist, wird die Stellbewegung des Abtriebsgliedes 14 durch eine Verschiebung des ersten Verzahnungsmittels 11 abgebremst. Sobald die Stellbewegung des Abtriebsgliedes 14 in der Vor-Endstellung in der gewünschten Weise abgebremst ist, wird das Magnetventil 61 umgeschaltet, wobei der Antriebsmotor 24 bei einer erneuten Druckbeaufschlagung der Druckkammer 32 zum Verschieben des Betätigungsgliedes 13 bzw. des ersten Verzahnungsmittels 11 in seine nicht-bremsende Stellung in einem Schleichgang betrieben wird, um das Abtriebsglied 14 langsam in seine durch die Festanschläge 21, 22 festgelegte Endstellung zu bringen.

Hierbei kann die erneute Beaufschlagung des Antriebsmotors 24 zu einem Zeitpunkt erfolgen, in dem sich das Abtriebsglied 14 in einer zweiten Vor-Endstellung befindet, die zwischen einer ersten Vor-Endstellung und der durch die Anschlagmittel 21, 22 festgelegten Position vorgesehen ist. Durch eine geeignete Wahl der zweiten Vor-Endstellung läßt sich ein besonders zügiges Anlegen der Anschlagmittel 21, 22 aneinander erreichen, da die zweite Vor-Endstellung so gewählt werden kann, daß die Stellbewegung des Abtriebsgliedes 14 zwar bereits genügend abgebremst ist, jedoch noch nicht zum Stillstand gekommen ist.

Ein wesentlicher Vorteil dieser Positioniervorrichtung besteht darin, daß der Positionsgeber 20 der zur Erfassung der Stellbewegung dient, und die Steuereinheit 19 einfacher gestaltet werden können, ohne daß hierdurch die Genauigkeit der Positionierung beeinträchtigt wird.

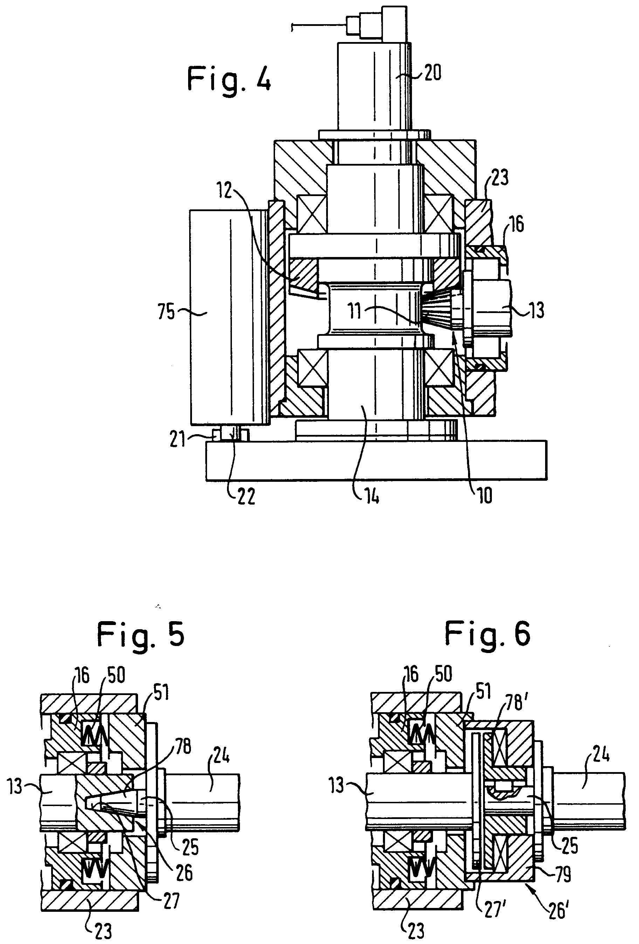

Die in Fig. 4 teilweise gezeigte Positioniervorrichtung entspricht im wesentlichen der Positioniervorrichtung nach Fig. 3, wobei der mit dem Festanschlag 21 am Positionierglied 14 zusammenwirkende Festanschlag 22, der am Gehäuse 23 angebracht ist, hydraulisch verstellbar ist, wozu eine Stellkolbenvorrichtung 75 vorgesehen ist, die in nicht dargestellter Weise mit Druckmittel beaufschlagbar ist.

Der Positionsgeber 20 zur Erfassung der Stellbewegung des Abtriebsgliedes 14 ist dabei am Abtriebsglied 14 drehfest angeordnet und in geeigneter Weise mit dem Gehäuse 23 verbunden.

Die Positioniervorrichtung nach Fig. 4 arbeitet dabei wie die nach Fig. 3, wobei jedoch der verstellbare Festanschlag 22 zwischen einer wirksamen und einer unwirksamen Position verstellt werden kann, um die Positionierung sowohl mit als auch ohne die Hilfe der Festanschläge 21, 22 durchzuführen.

Wie Fig. 5 zeigt, ist bei einer anderen Ausführung der Positioniervorrichtung zwischen dem Antriebsmotor 24 und dem Betätigungsglied 13 eine Kupplung 26 vorgesehen, deren antriebsseitiges Kupplungsglied als Konus 78 an der Antriebswelle 25 des Antriebsmotors 24 ausgebildet ist. Das antriebsseitige Kupplungsglied 27 wird von einer entsprechenden konischen Bohrung im Betätigungsglied 13 gebildet.

Wenn das Betätigungsglied 13 bei druckentlasteter Druckkammer 32 durch die Tellerfedern 50 zusammen mit dem Kolben 16 in seine Klemmblockier-Stellung gedrückt wird, so wird die Kupplung 26 ausgedrückt und die Bremsung und Positionierung des Abtriebsgliedes 14 erfolgt ausschließlich durch die Verschiebung des Betätigungsgliedes 13.

Sobald die Druckkammer 32 mit Druck beaufschlagt wird, wodurch das Betätigungsglied 13 durch den Kolben 16 gegen die Kraft der Tellerfedern 50 in seine Freigabe-Stellung verschoben wird, wird die Kupplung 26 eingerückt.

Fig. 6 zeigt eine andere Ausgestaltung der Kupplung, die zwischen dem Betätigungsglied 13 und dem Antriebsmotor 24 vorgesehen ist. Die Kupplung 26' ist dabei in einem Kupplungsgehäuse 79 angeordnet, das an der Befestigungsbuchse 51 angebracht ist. Der Antriebsmotor 24 ist am Kupplungsgehäuse 79 angeflanscht.

Das antriebsseitige Kupplungsglied 78' ist drehfest auf die Abtriebswelle 25 des Antriebsmotors 24 aufgesteckt und in geeigneter Weise drehbar im Kupplungsgehäuse 79 gelagert. Das dem scheibenförmigen, eingangsseitigen Kupplungsglied 78' gegenüberliegende scheibenförmige, ausgangsseitige Kupplungsglied 27' ist fest mit dem Betätigungsglied 13 verbunden, so daß die Kupplung 26' entsprechend einer Verschiebung des Betätigungsgliedes 13 ein- und ausgedrückt wird.

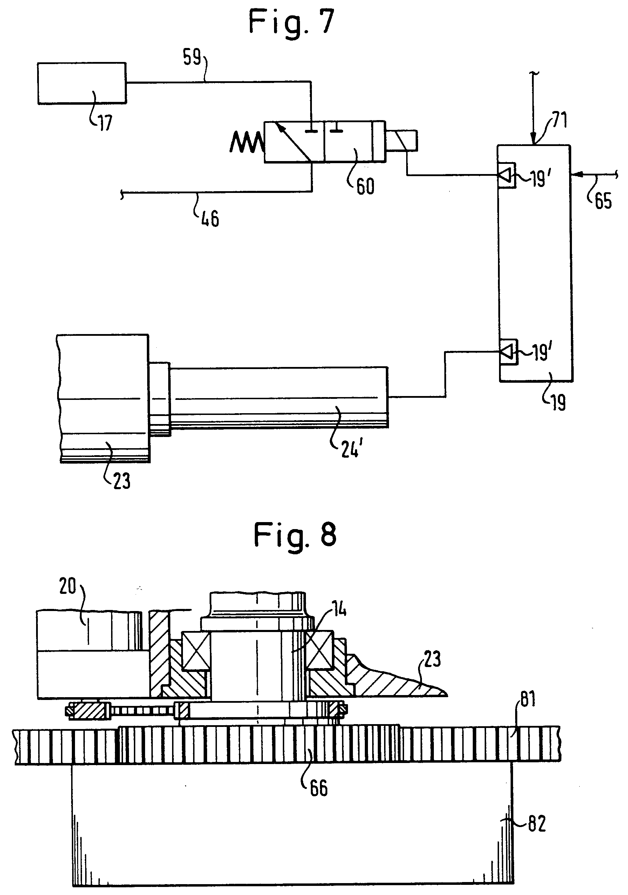

Bei der in Fig. 7 teilweise dargestellten Positioniervorrichtung ist anstelle eines pneumatischen oder hydraulischen Antriebsmotors ein geeigneter elektrischer Antriebsmotor 24' vorgesehen, der unmittelbar von der Steuereinheit 19 ein- und ausgeschaltet wird. Durch die Steuereinheit 19 wird dabei auch die Geschwindigkeit des Motors sowie seine Drehrichtung gesteuert. Zur Verschiebung des am Betätigungsglied 13 vorgesehenen Verzahnungsmittels 11 ist wiederum die Druckmittelquelle 17 vorgesehen, die über die Leitungen 59, 46 und das Magnetventil 60 die Druckkammer 32 zur Verschiebung des Kolbens 16 beaufschlagt.

Bei der Positioniervorrichtung nach Fig. 8 ist am Abtriebsglied 14 ein Abtriebsflansch 66 so ausgebildet, daß er mit einem Antriebsmittel 81 für eine translatorisch zu verschiebende und zu positionierende Einrichtung 82 zusammenwirkt. Beispielsweise kann der Abtriebsflansch 66 als Zahnrad ausgebildet sein, das mit einer als Antriebsmittel wirkenden Zahnstange 81 kämmt, an der die zu positionierende Einrichtung befestigt ist.

Die Positionierung der zu positionierenden Einrichtung 82 erfolgt bei translatorischer Bewegung in entsprechender Weise wie die Dreh-Positionierung.

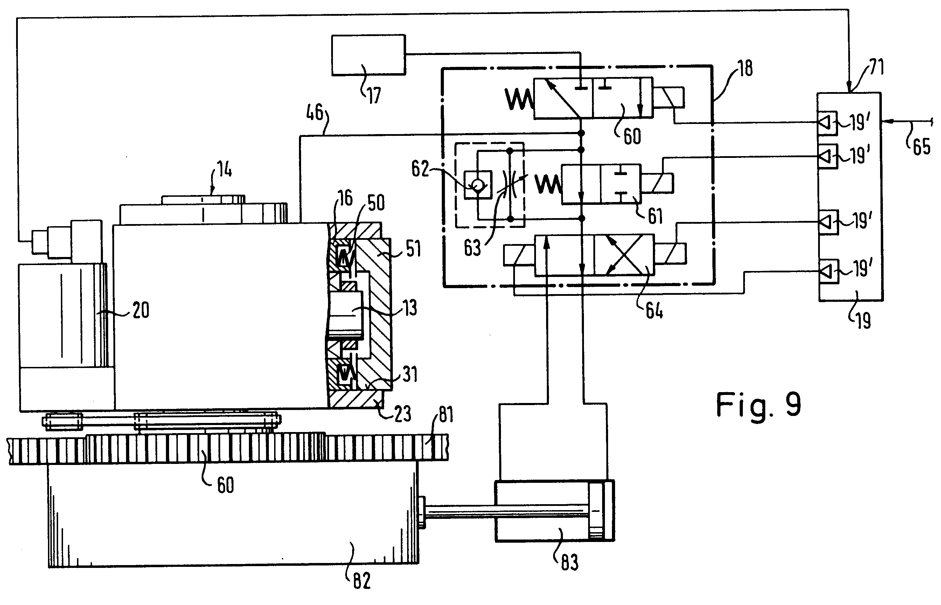

Die Positioniervorrichtung nach Fig. 9 unterscheidet sich von der nach Fig. 8 dadurch, daß anstelle eines Antriebsmotors für das Betätigungsglied 13 eine Antriebsvorrichtung 83 für Linearantrieb vorgesehen ist, die unmittelbar auf die zu positionierende Einrichtung 82 wirkt. Die Antriebseinrichtung ist dabei z.B. als Kolben-Zylinder-Einheit 83 ausgebildet, welche über die Ventilanordnung 18 mit Druckmittel von der Druckmittelquelle 17 beaufschlagt wird, um eine translatorische Verschiebebewegung der zu positionierenden Einrichtung 82 zu bewirken. Die Zylinderbohrung 31, die den Kolben 16 und das Betätigungsglied 13 aufnimmt, ist dabei durch einen Deckel 51 verschlossen.

Die auf diese Weise bewirkte Stellbewegung der zu positionierenden Einrichtung 82 wird über die Zahnstange 81 auf den z.B. als Zahnrad abgebildeten Abtriebsflansch 66 des Abtriebsgliedes 14 übertragen, so daß das Abtriebsglied 14 der Stellbewegung folgt und eine entsprechende Drehung ausführen kann, die vom Positionsgeber 20 erfaßt wird, der ein entsprechendes Positioniersignal an die Steuereinheit 19 abgibt.

Wenn eine Stellbewegung zum Positionieren der Einrichtung 82 von der Kolben-Zylinder-Einheit 83 durchgeführt werden soll, so wird das erste Verzahnungsmittel 11 in seine nicht-bremsende Stellung verschoben. Zum Bremsen der Stellbewegung und zum Positionieren wird dann das erste Verzahnungsmittel 11 durch den federbeaufschlagten Kolben 16 in seine bremsende Stellung bewegt.

Die Abbremsung der Stellbewegung sowie die Fixierung der Positionierung wird dabei ausschließlich von dem Bremsglied 13 bewirkt.

Um die Bremswirkung der insbesondere anhand von Fig. 9 beschriebenen Positioniervorrichtung zu verbessern, können anstelle eines einzelnen Betätigungsgliedes 13 mit einem Verzahnungsmittel 11 weitere, entsprechende Verzahnungsmittel aufweisende Betätigungsglieder vorgesehen sein, die in Bezug auf das Abtriebsglied 14 bzw. das an diesem vorgesehene Verzahnungsmittel 12 umfangsmäßig verteilt sind und mit dem Verzahnungsmittel 12 kämmen. Die Beaufschlagung der Betätigungsglieder erfolgt dabei in der gleichen Weise wie oben beschrieben. Dabei können vier Betätigungsglieder vorgesehen sein, so daß sich auf diese Weise die Bremswirkung bei gleicher Verzahnungsgröße vervierfachen läßt.

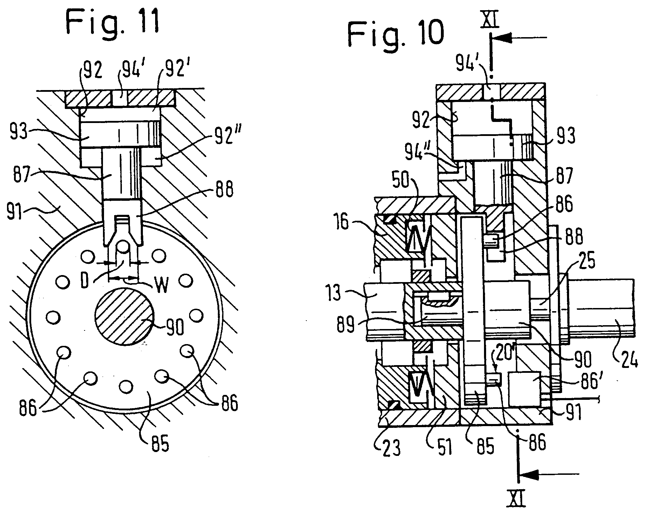

Wie in Fig. 10 dargestellt, ist bei einer Positioniervorrichtung zwischen dem Antriebsmotor 24 und dem Betätigungsglied 13 eine Positionsteilscheibe 85 angeordnet, an der Indexstifte 86 vorgesehen sind. Die in einem Zwischengehäuse 91 angeordnete Positionsteilscheibe 85 ist dabei abtriebsseitig über einen Zapfen 89 drehfest mit dem Betätigungsglied 13 und eintriebsseitig über einen hülsenförmigen Ansatz 90 drehfest mit der Abtriebswelle 25 des Antriebsmotors 24 verbunden. In einer sich in Bezug auf die Drehachse der Positionsteilscheibe 85 radial erstreckenden Zylinderbohrung 92 ist ein Stellkolben 87 verschiebbar angeordnet, an dem eine Indexgabel 88 befestigt ist.

Eine am Indexkolben 87 vorgesehene Kolbenplatte 93 unterteilt die Zylinderbohrung 92 in eine erste und eine zweite Druckkammer 92' bzw. 92''. Die Druckkammern 92', 92'' sind dabei über entsprechende Einlaßöffnungen 94', 94'' mit Druckmittel beaufschlagbar, um den Stellkolben 87 zwischen einer in Fig. 10 dargestellten Positionierstellung, in der die Indexgabel 88 mit einem der Indexstifte 86 in Eingriff steht, und einer Freigabe-Stellung, in der die Positionsteilscheibe 85 drehbar ist, hin und her zu verschieben.

Wie in Fig. 11 dargestellt, sind auf der Positionsteilscheibe z.B. zwölf Indexstifte 86 in gleichen Winkelabschnitten umfangsmäßig verteilt angeordnet.

Da die Positionsteilscheibe eingangsseitig vor den Verzahnungsmitteln 11, 12 wirksam wird, lassen sich aufgrund der von den Verzahnungsmitteln 11, 12 bewirkten Übersetzung, z.B. 10 zu 1, eine Vielzahl von Positionen, z.B. 120 Positionen, sehr genau einstellen. Da die Öffnungsweite W der Positioniergabel 88 deutlich größer ist als der Durchmesser D der Positionierstifte 86, ist es zum Erreichen einer bestimmten Position zunächst nur erforderlich, daß die Positionsteilscheibe 85 und damit auch ein zu positionierendes Organ in eine Stellung gebracht wird, die innerhalb eines Positionsstreufensters liegt, das durch die Differenz zwischen der Öffnungsweite W der Indexgabel 88 und dem Durchmesser D der Indexstifte 86 festgelegt ist. Diese Positionierung in das Positionsstreufenster erfolgt dabei in der oben beschriebenen Weise.

Befindet sich die Positionsteilscheibe 85 in der gewünschten Abschaltstellung, so wird der Stellkolben 87 in seine in Fig. 10 dargestellte Positionierstellung verschoben, wobei die Indexgabel 88 mit dem entsprechenden Indexstift 86 in Eingriff tritt und dabei die Positionsteilscheibe 85 in ihre genaue durch eine Paßaufnahme für den Indexstift definierte Stellung bewegt.

Das Bremsen der Stellbewegung zum Positionieren und die Feinpositionierung mit der Indexgabel 88 können dabei gleichzeitig gestartet werden, so daß sich diese beiden Vorgänge überlappen. Es ist jedoch auch eine nachträgliche Feinpositionierung in gebremster Stellung möglich.

Da diese Positionskorrektur eingangsseitig erfolgt, sind aufgrund der Übersetzung des Getriebes 10 nur sehr kleine Positionierkräfte und -momente erforderlich. Dabei profitiert auch die Genauigkeit der Positionierung von der Übersetzung, da sich ein ggf. bei der Positionierung der Positionsteilscheibe 85 auftretender, jedoch sehr kleiner Positionierfehler getriebeausgangsseitig entsprechend der Übersetzung des Getriebes weiter verkleinert. Auf diese Weise läßt sich ein zu positionierendes Organ auf äußerst einfache Weise praktisch mit höchster Genauigkeit in eine gewünschte Position bringen.

Den Indexstiften 86 kann, wie in Fig. 10 dargestellt, ein Impulsgeber 86' zugeordnet sein, der mit der Steuereinheit 19 verbunden ist und zusammen mit den Indexstiften 86 als Positionsgeber 20' Verwendung findet.

Dies hat den Vorteil, daß die gewünschten Anfahrpositionen automatisch bekannt sind und daher nicht über einen gesonderten Positionsgeber eingerichtet werden müssen.

## Patentansprüche

1. Positioniervorrichtung mit zumindest einem zu positionierenden Organ, umfassend ein erstes angetriebenes Verzahnungsmittel und ein zweites Verzahnungsmittel, das mit dem ersten Verzahnungsmittel kämmt,
dadurch **gekennzeichnet,**
daß die beiden Verzahnungsmittel (11, 12) unter Ausbildung einer Bremswirkung oder Klemmblockierung relativ zueinander verschiebbar und insbesondere zur antriebsseitigen Drehmomentverstärkung ausgebildet sind.

2. Positioniervorrichtung nach Anspruch 1,
dadurch **gekennzeichnet,**
daß das erste, antriebsseitige Verzahnungsmittel (11) gegenüber dem zweiten Verzahnungsmittel (12) verschiebbar angeordnet und insbesondere dieses erste, an einem Betätigungsglied (13) angeordnete Verzahnungsmittel (11) durch ein Druckmittel verschiebbar ist.

3. Positioniervorrichtung nach Anspruch 1 oder 2,
dadurch **gekennzeichnet,**
daß die Verzahnungsmittel (11, 12) als Kegelräder mit Hypoid-Verzahnung ausgebildet sind.

4. Positioniervorrichtung nach Anspruch 2,
dadurch **gekennzeichnet,**
daß das fest mit dem ihm zugeordneten Verzahnungsmittel (11) verbundene Betätigungsglied (13) in Verschieberichtung fest in einem Kolben (16) einer Kolben-Zylinder-Anordnung (15) angeordnet ist, der zur Verschiebung des Betätigungsgliedes (13) in seine Brems- bzw. Klemmblockier-Stellung federbeaufschlagt und zur Verschiebung des Betätigungsglieds (13) in eine nicht-bremsende Freigabe-Stellung mit Druckmittel beaufschlagbar ist.

5. Positioniervorrichtung nach einem der Ansprüche 1 bis 4,
dadurch **gekennzeichnet,**
daß zur Verschiebung des Betätigungsgliedes (13) Druckmittel von einer Druckmittelquelle (17) über eine Ventilanordnung (18) zuführbar ist, die von einer Steuereinheit (19) eines Lageregelkreises beaufschlagt ist, wobei der Lageregelkreis vorzugsweise einen dem zu positionierenden Organ zugeordneten Positionsgeber (20) aufweist, der mit der Steuereinheit (19) verbunden ist.

6. Positioniervorrichtung nach einem der vorhergehenden Ansprüche,
dadurch **gekennzeichnet,**
daß an einem Abtriebsglied (14) Anschlagmittel (21) angeordnet sind, die mit entsprechenden Anschlagmitteln (22) zusammenwirken, welche einem das Abtriebsglied (14) lagernden Gehäuse (23) zugeordnet sind, wobei die Anschlagmittel insbesondere als einrichtbare Festanschläge (21, 22) ausgebildet und vorzugsweise zumindest die am Gehäuse (23) angeordneten Festanschläge (22) durch Druckmittel verstellbar und / oder verschiebbar sind.

7. Positioniervorrichtung nach einem der vorhergehenden Ansprüche,
dadurch **gekennzeichnet,**
daß das Betätigungsglied (13) drehfest und axial verschiebbar mit einer Abtriebswelle (25) eines Antriebsmotors (24) verbunden ist, der von der Steuereinheit (19) des Lageregelkreises beaufschlagbar ist, wobei insbesondere zwischen dem Betätigungsglied (13) und der Abtriebswelle (25) des Antriebsmotors (24) eine schaltbare Kupplung (26) vorgesehen ist.

8. Positioniervorrichtung nach Anspruch 7,
dadurch **gekennzeichnet,**
daß die Kupplung (26) eingerückt ist, wenn sich das Betätigungsglied (13) in seiner nicht-bremsenden Freigabe-Stellung befindet, und daß die Kupplung (26) durch eine Verschiebung des Betätigungsgliedes (13) in seine Brems- bzw. Klemmblockier-Stellung ausrückbar ist.

9. Positioniervorrichtung nach einem der vorhergehenden Ansprüche,
dadurch **gekennzeichnet,**
daß mit dem ersten, angetriebenen Verzahnungsmittel (11) eine Positionsteilscheibe (85) drehfest verbunden ist, die eine Vielzahl von umfangsmäßig verteilten Indexmitteln (86) aufweist, wobei jeweils eines der Indexmittel (86) von einem Stellglied (87) beaufschlagbar ist, um die Positionsteilscheibe (85) in die genaue Position zu drehen, und daß die umfangsmäßig in gleichen Winkelabständen angeordneten Indexmittel insbesondere von Indexstiften (86) gebildet werden, die mit einer am Stellglied (87) vorgesehenen Indexgabel (88) zur Betätigung der Positionsteilscheibe (85) zusammenwirken, wobei vorzugsweise die Indexgabel (88) einen Fangtrichter und eine sich daran anschließende Paßaufnahme für die Indexstifte (86) aufweist.

10. Positioniervorrichtung nach Anspruch 9,
dadurch **gekennzeichnet,**
daß den Indexmitteln (86) ein mit der Steuereinheit (19) verbundener Impulsgeber (86') zugeordnet ist, der zusammen mit den Indexmitteln (86) einen Positionsgeber bildet.
